# EUROPEAN PATENT SPECIFICATION

(11) **EP 2 690 389 B1**
(45) Date of publication and mention of the grant of the patent: **27.09.2017**
(21) Application number: 13170107.0
(22) Date of filing: 31.05.2013
(51) Int. Cl.: F28D 9/00, F28F 3/04, F28F 3/08, F28F 13/12

(54) **Heat exchanger**
Wärmetauscher
Échangeur de chaleur

(30) Priority: 27.07.2012 TW 101214514 U
(43) Date of publication of application: 29.01.2014
(73) Proprietor: Chen, Huang-Han, 241 New Taipei City (TW)
(72) Inventor: Chen, Huang-Han, 241 New Taipei City (TW)
(74) Representative: Viering, Jentschura & Partner mbB Patent- und Rechtsanwälte

(56) References cited:
- JP-A- H06 331 295
- US-A- 5 836 383
- US-A- 6 014 312
- US-A- 6 152 215

## Description

### BACKGROUND OF THE INVENTION

### Field of the Invention

The invention relates to a heat exchanger More particularly, the invention relates to a heat exchanger relates to a heat having a good heat-exchange efficiency.

### Description of Related Art

Heat exchange technology is widely applied in various electronic products. Functions of heat exchange technology include heat dissipation, cooling, exchange of hot and cold fluid, or heat recovery. No matter what forms of heat exchangers have one common ground: the heat-exchange efficiency is based on the heat exchange area.

Now, electronic products become exquisite gradually, so that all kinds of electronic products become smaller and thinner. Thus, the heat exchanger inside the smaller and thinner electronic product still must have enough heat exchange area. But, its a difficult design. As the same, electronic products also have higher heat-generating efficiency. However, the heat-exchange such as U.S. Patent 5,462,112 still could not heat dissipate for the electronic products with higher heat-generating efficiency. Thus, a heat exahanger having a good heat-exchange efficiency is required greatly. US 5,836,383 A discloses a heat transfer device according to the preamble of claim 1 with a plate sandwich structure including two flow-duct-covering plates and one flow duct plate unit arranged in between which is formed of one or more superimposed flow duct plates each provided with flow duct breakthroughs. By means of the flow duct breakthroughs in one flow duct plate or by suitably overlapping flow duct breakthroughs of several adjoining flow duct plates, one or more flow paths are formed which extend predominantly in parallel to the plate plane between an inflow point and an outflow point. However, there is still a demand of improving the heat-exchange efficiency.

### SUMMARY OF THE INVENTION

The invention is directed to a heat exchanger that increases the contacting area between the fins and heat-exchange fluid substantially, and results in heat exchange operation efficiently.

In the invention, a heat exchanger is provided. The heat exchanger includes at least a first fin and at least a second fin. Each first fin has a first body, a first communicating-groove structure, a second communicating-groove structure, and a first connecting-groove structure, wherein the first communicating-groove structure, the second communicating-groove structure, and the first connecting-groove structure are disposed in the first body. The first communicating-groove structure has multiple first communicating-groove assemblies arranged in the first body along a disposing axis, and the first connecting-groove structure has multiple first connecting-groove assemblies arranged in the first body along the disposing axis. Each first communicating-groove assembly has multiple first communicating-groove units arranged in the first body along a connecting axis, and each first connecting-groove assembly has multiple first connecting-groove units arranged in the first body along the connecting axis.

Each second fin has a second body, a third communicating-groove structure, a fourth communicating-groove structure, and a second connecting-groove structure, wherein the third communicating-groove structure, the fourth communicating-groove structure, and the second connecting-groove structure are disposed in the second body. The third communicating-groove structure has multiple third communicating-groove assemblies arranged in the second body along the disposing axis, and the second connecting-groove structure has multiple second connecting-groove assemblies arranged in the second body along the disposing axis. Each third communicating-groove assembly has multiple third communicating-groove units arranged in the second body along the connecting axis. Each second connecting-groove assembly has multiple second connecting-groove units arranged in the second body along the connecting axis. Each first fin and each second fin are connected along an assembly axis. The second connecting-groove assemblies are communicated with the first communicating-groove structure and the second communicating-groove structure, and the first connecting-groove assemblies are communicated with the third communicating-groove structure and the fourth communicating-groove structure. The first communicating-groove unit of each first communicating-groove assembly is staggered with the adjacent first communicating-groove unit. The first connecting-groove unit of each first connecting-groove assembly is staggered with the adjacent first connecting-groove unit. The third communicating-groove unit of each third communicating-groove assembly is staggered with the adjacent third communicating-groove unit. The second connecting-groove unit of each second connecting-groove assembly is staggered with the adjacent second connecting-groove unit.

The first communicating-groove structure, the second connecting-groove structure, and the second communicating-groove structure constitute a first guiding channel, and the third communicating-groove structure, the first connecting-groove structure, and the fourth communicating-groove structure constitute a second guiding channel, wherein a first heat-exchange fluid flows in the first guiding channel, and a second heat-exchange fluid flows in the second guiding channel.

In one embodiment of the present invention, one end of each second connecting-groove assembly of the second fin is overlapped with the first communicating-groove structure of the adjacent first fin along the connecting axis. The other end of each second connecting-groove assembly is overlapped with the second communicating-groove structure of the first fin. One end of each first connecting-groove assembly of the first fin is overlapped with the third communicating-groove structure of the adjacent second fin along the connecting axis. The other end of each first connecting-groove assembly is overlapped with the fourth communicating-groove structure of the second fin.

In one embodiment of the present invention, one end of the second connecting-groove unit of the second fin is overlapped with one end of the first communicating-groove unit of the adjacent first fin. The other end of the second connecting-groove unit is overlapped with one end of another first communicating-groove unit of the first fin or the second communicating-groove structure of the first fin. One end of the first connecting-groove unit of the first fin is overlapped with one end of the third communicating-groove unit of the adjacent second fin. The other end of the first connecting-groove unit is overlapped with one end of another third communicating-groove unit of the second fin or the fourth communicating-groove structure of the second fin.

In one embodiment of the present invention, and the two first communicating-groove units overlapped with the second connecting-groove unit are arranged in the first body along the connecting axis closely, and the two third communicating-groove units overlapped with the first connecting-groove unit are arranged in the second body along the connecting axis closely.

In one embodiment of the present invention, the second connecting-groove unit of the second fin is communicated with the two adjacent first communicating-groove units arranged along the disposing axis and the two adjacent first communicating-groove units arranged along the connecting axis in the first fin. The first connecting-groove unit of the first fin is communicated with the two adjacent third communicating-groove units arranged along the disposing axis and the two adjacent third communicating-groove units arranged along the connecting axis in the second fin.

In one embodiment of the present invention, the first communicating-groove unit, the third communicating-groove unit, the first connecting-groove unit, and the second connecting-groove unit are diamond type structures.

In one embodiment of the present invention, the second communicating-groove structure has multiple second communicating-groove units arranged in the first body along the disposing axis. Each second communicating-groove unit is arranged in one side of the corresponding first communicating-groove assembly along the connecting axis. The fourth communicating-groove structure has multiple fourth communicating-groove units arranged in the second body along the disposing axis. Each fourth communicating-groove unit is arranged in one side of the corresponding third communicating-groove assembly along the connecting axis.

In one embodiment of the present invention, the second fin is an inverted state of the first fin.

In one embodiment of the present invention, the first communicating-groove structure further includes a first mainstream channel, and each first communicating-groove assembly constitutes the tributary channel connected with the first mainstream channel along the connecting axis. The first connecting-groove structure further includes a second mainstream channel, and each first connecting-groove assembly constitutes the tributary channel connected with the second mainstream channel along the connecting axis. The third communicating-groove structure further includes a third mainstream channel, and each third communicating-groove assembly constitutes the tributary channel connected with the third mainstream channel along the connecting axis. The second connecting-groove structure further includes a fourth mainstream channel, and each second connecting-groove assembly is connected with the fourth mainstream channel along the connecting axis. The first mainstream channel and the fourth mainstream channel are communicated with each other, and the third mainstream channel and the second mainstream channel are communicated with each other.

In one embodiment of the present invention, the projection area of the second connecting-groove structure in the first body is overlapped with the first communicating-groove structure and the second communicating-groove structure, and the projection area of the first connecting-groove structure in the second body is overlapped with the third communicating-groove structure and the fourth communicating-groove structure.

In one embodiment of the present invention, the first communicating-groove structure, the first connecting-groove structure, the third communicating-groove structure, and the second connecting-groove structure are similar to the "claw" type structures or the "E" type structures.

In one embodiment of the present invention, the first communicating-groove structure and the first connecting-groove structure are embedded in the first body, and the third communicating-groove structure and the second connecting-groove structure are embedded in the first body. The second communicating-groove structure is disposed between the second mainstream channel and the first communicating-groove structure, and the fourth communicating-groove structure is disposed between the fourth mainstream channel and the third communicating-groove structure.

In one embodiment of the present invention, the heat exchanger further includes a third fin and a fourth fin, wherein the third fin and the fourth fin are disposed in the two sides of the assembly of the first fin and the second fin along the assembly axis respectively. The third fin has a first inlet structure and a first outlet structure, and the fourth fin has a second inlet structure and a second the outlet structure. The first inlet structure and the first outlet structure are connected to the two ends of the first guiding channel, and the second inlet structure and the second outlet structure are connected to the two ends of the second guiding channel. The first inlet structure is communicated with the first communicating-groove structure, and the first outlet structure is communicated with the second communicating-groove structure. The second inlet structure is communicated with the third communicating-groove structure, and the second outlet structure is communicated with the fourth communicating-groove structure.

In one embodiment of the present invention, the projection area of the first inlet structure and the first outlet structure of the third fin in the fourth fin is not overlapped with the second inlet structure and the second the outlet structure.

In one embodiment of the present invention, the first outlet structure has multiple first the outlet units arranged along the disposing axis, the second outlet structure has multiple second the outlet units arranged along the disposing axis. The first the outlet units are communicated with the second communicating-groove structure, and the second outlet units are communicated with the fourth communicating-groove structure.

In one embodiment of the present invention, the projection area of the first the outlet units in the first body are overlapped with the second communicating-groove structure, and the projection area of the second outlet units in the second body are overlapped with the fourth communicating-groove structure.

In one embodiment of the present invention, the heat exchanger further includes a fifth fin and a sixth fin, wherein the fifth fin and the sixth fin are disposed in the two sides of the assembly of the first fin, the second fin, the third fin, and the fourth fin along the assembly axis respectively. The fifth fin has a first through hole and a second through hole, and the sixth fin has a third through hole and a fourth through hole. One side of the first inlet structure is communicated with the first communicating-groove structure, and another side of the first inlet structure is communicated with the first through hole. One side of the first outlet structure is communicated with the second communicating-groove structure, and another side of the first outlet structure is communicated with the second through hole. One side of the second inlet structure is communicated with the third communicating-groove structure, and another side of the second inlet structure is communicated with the third through hole. One side of the second outlet structure is communicated with the fourth communicating-groove structure, and another side of the second outlet structure is communicated with the fourth through hole.

In one embodiment of the present invention, the fourth fin is an inverted state of the third fin, and the sixth fin is the inverted state of the fifth fin.

As described in the embodiments of the invention, in the invention of the heat exchanger, at least two fins are set with multiple communicating-groove structures and connecting-groove structure in the heat exchanger respectively. In each fin, a communicating-groove structure is not communicated with a connecting-groove structure, and one communicating-groove structure is not communicated with another communicating-groove structure. When the fins are assembled, a communicating-groove structure of one fin is communicated with the adjacent communicating-groove structure through a connecting-groove structure of another fin. The communicating-groove structures of each fin constitute a guiding channel by the connecting-groove structure of another fin when the fins are assembled. Thus, the heat exchanger of the invention has two guiding channels to perform a heat-exchange process for the fluids with different temperatures.

In addition, since the heat exchanger of the invention is assembled by at least two types of fins staggered with each other and each fin has multiple communicating-groove structures and a connecting-groove structure, the heat-exchange fluid is forced to be confluent or separated constantly when The heat-exchange fluid flows into the heat exchanger. This increases the contact area between the heat-exchange fluid and heat exchanger substantially, and increases the rate of the heat-exchange process of heat-exchange fluids to achieve good heat-exchange performance.

Other features and advantages of the invention will be further understood from the further technological features disclosed by the embodiments of the invention wherein there are shown and described embodiments of this invention, simply by way of illustration of best modes to carry out the invention.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

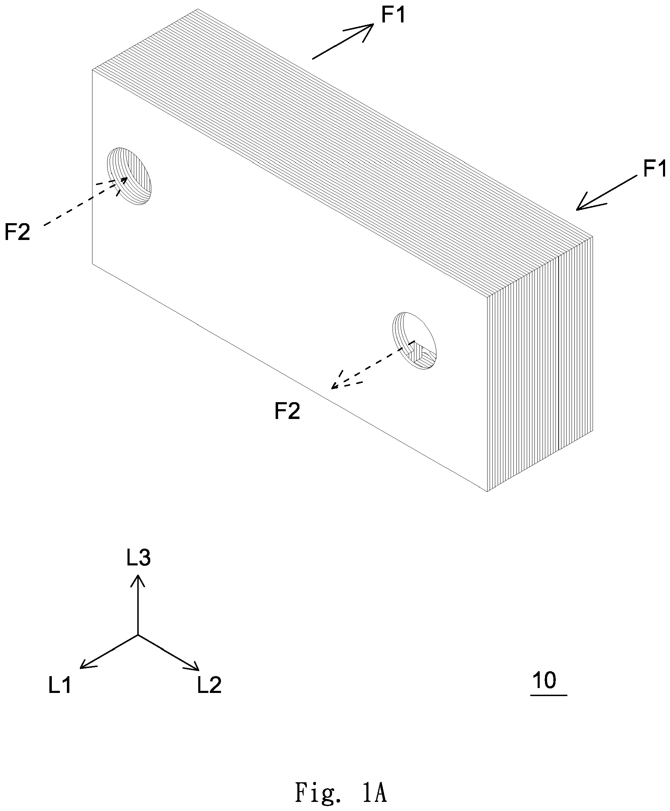

FIG. 1A is a schematic view illustrating another heat exchanger according to one embodiment of the present invention.

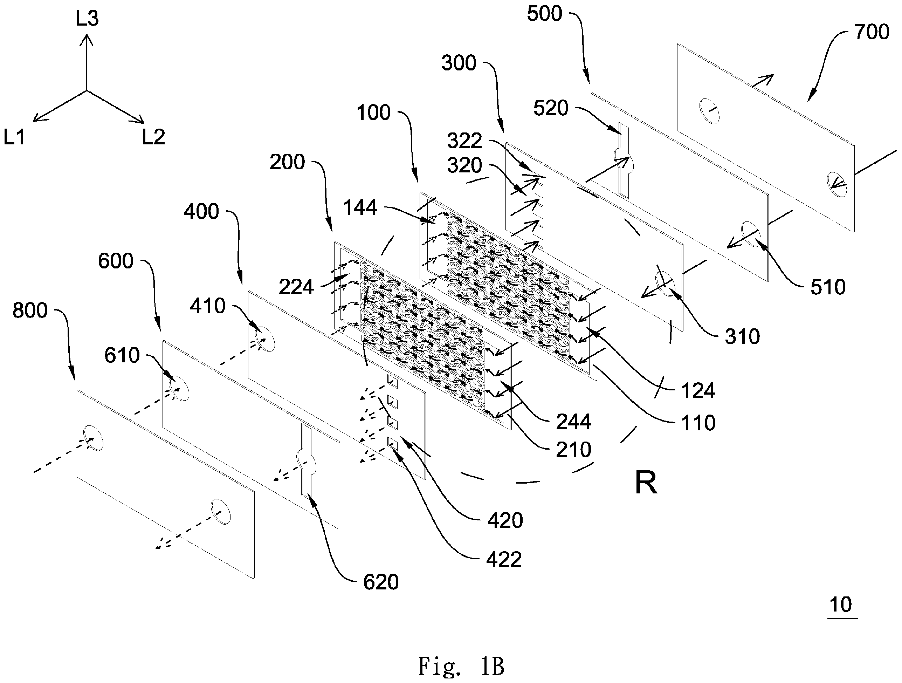

FIG. 1B is an exploded view illustrating the heat exchanger depicted in FIG. 1A.

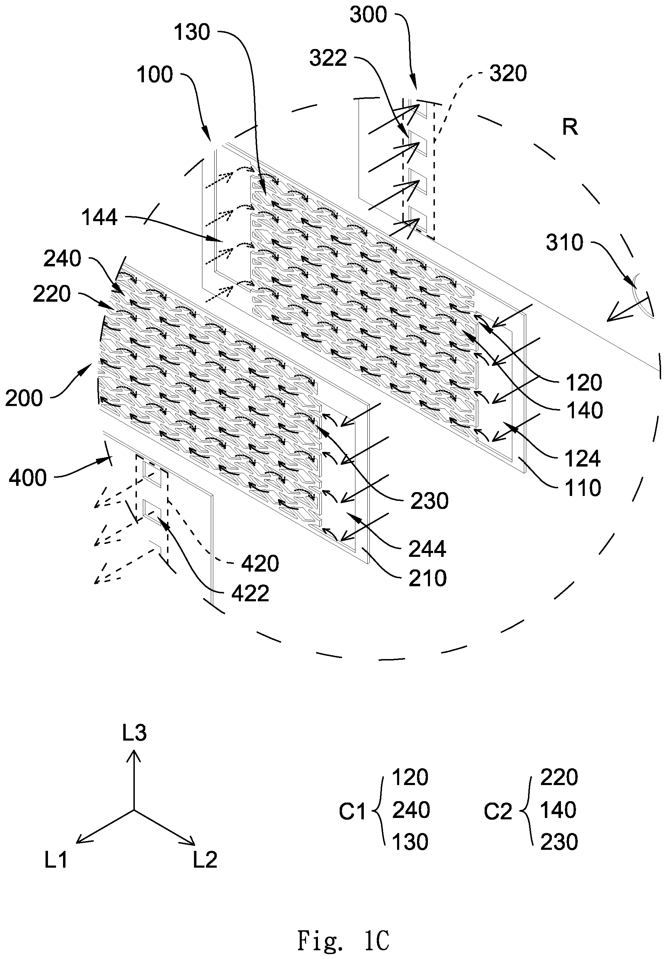

FIG. 1C is an enlarged schematic view illustrating a region of R depicted in FIG. 1B.

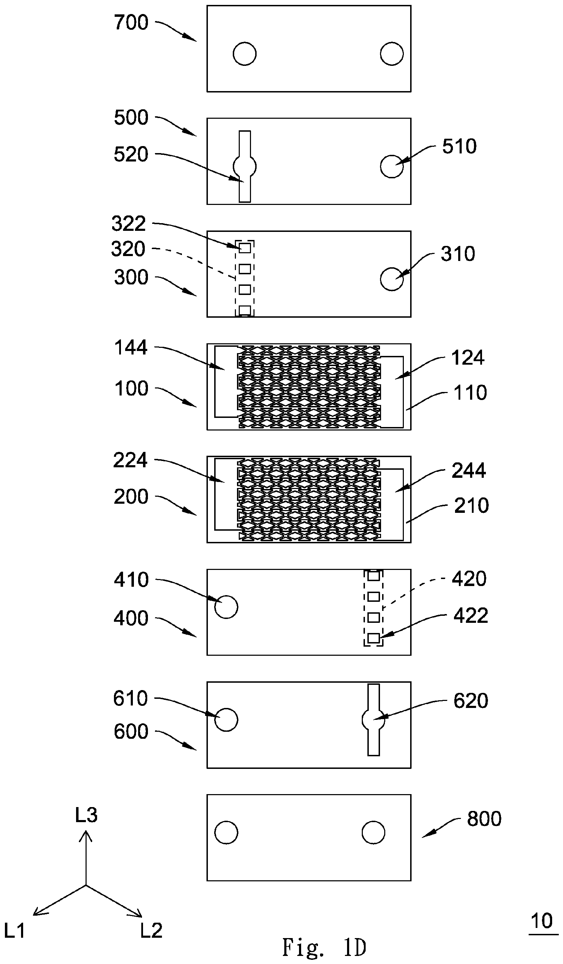

FIG. 1D is a plane schematic view illustrating the heat exchanger depicted in FIG. 1B.

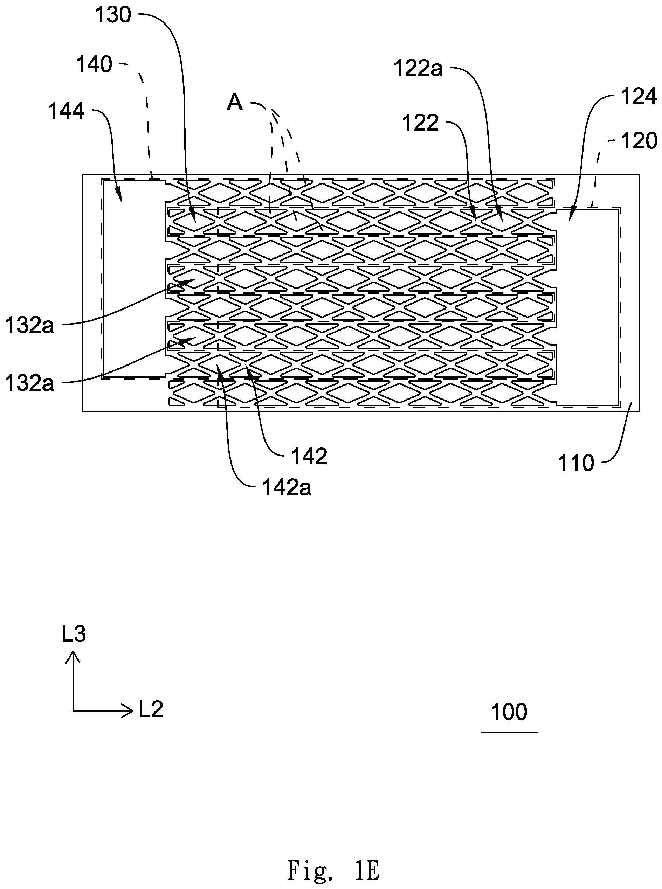

FIG. 1E is an enlarged schematic view illustrating the first fin depicted in FIG. ID.

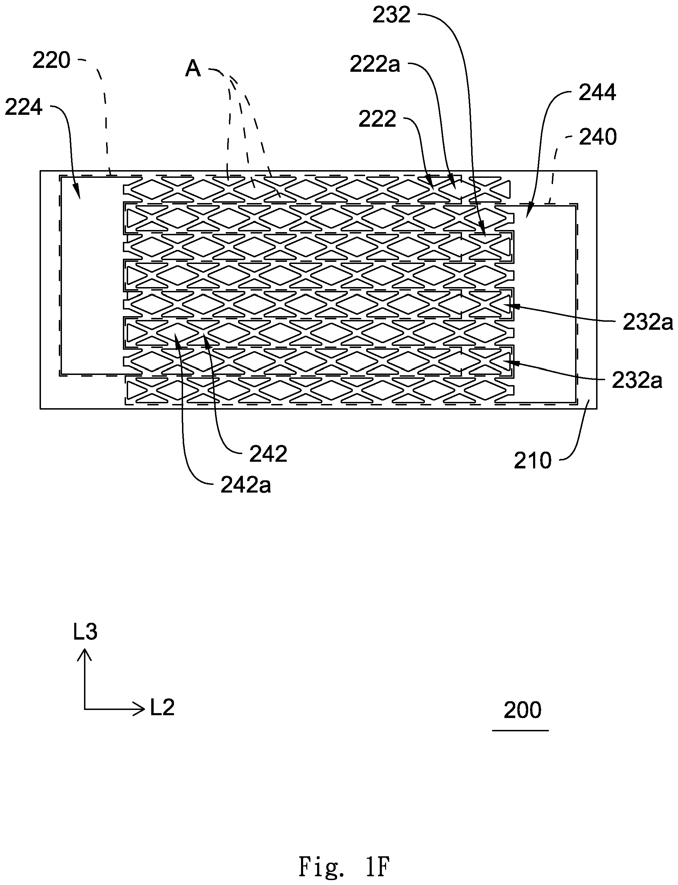

FIG. 1F is an enlarged schematic view illustrating the second fin depicted in FIG. 1D.

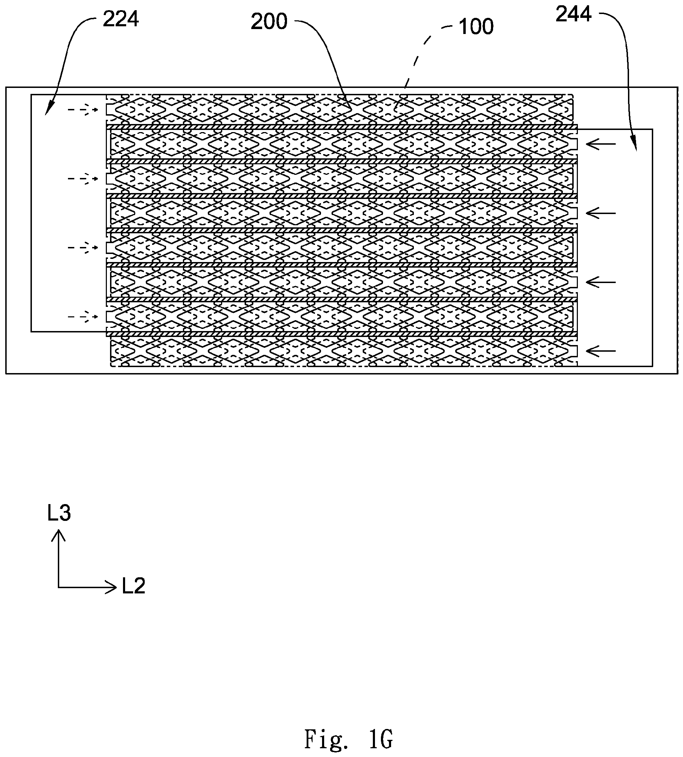

FIG. 1G is a schematic view illustrating a stack of the first fin depicted in FIG. 1E and the second fin depicted in FIG. 1F.

### DESCRIPTION OF EMBODIMENTS

Other features and advantages of the invention will be further understood from the further technological features disclosed by the embodiments of the invention wherein there are shown and described embodiments of this invention, simply by way of illustration of best modes to carry out the invention.

FIG. 1A is a schematic view illustrating another heat exchanger according to one embodiment of the present invention. FIG. 1B is an exploded view illustrating the heat exchanger depicted in FIG. 1A. FIG. 1C is an enlarged schematic view illustrating a region of R depicted in FIG. 1B. FIG. 1D is a plane schematic view illustrating the heat exchanger depicted in FIG. 1B. FIG. 1E is an enlarged schematic view illustrating the first fin depicted in FIG. 1D. FIG. 1F is an enlarged schematic view illustrating the second fin depicted in FIG. 1D. FIG. 1G is a schematic view illustrating a stack of the first fin depicted in FIG. 1E and the second fin depicted in FIG. 1F. Referring to FIG. 1A, FIG. 1B, FIG. 1C, FIG. 1D, FIG. 1E, FIG. 1F, and FIG. 1G, the heat exchanger 10 of the present embodiment includes a first fin 100, a second fin 200, a third fin 300, a fourth fin 400, a fifth fin 500, and a sixth fin 600. The first fin 100, the second fin 200, the third fin 300, the fourth fin 400, the fifth fin 500, and sixth fin 600 are, for example, rectangular sheets, and contacted along the assembly axis L1.

The third fin 300 and the fourth fin 400 are disposed in the two sides of the assembly of the first fin 100 and the second fin 200 along the assembly axis L1 respectively, and the fifth fin 500 and the sixth fin 600 are disposed in the two sides of the assembly of the first fin 100, the second fin 200, the third fin 300, and the fourth fin 400 along the assembly axis L1 respectively. In the present embodiment, the second fin 200 is, for example, an inverted state of the first fin 100. The inverted state is, for example, the state of the rotating 180 degrees of the first fin 100 along the assembly axis L1. The second fin 200 also be other inverted state of the first fin 100, including but not limited to this type. In addition, the fourth fin 400 is, for example, an inverted state of the third fin 300, and the sixth fin 600 is, for example, an inverted state of the fifth fin 500.

The heat exchanger 10 of the present embodiment is constituted of at least a first fin 100 and at least a second fin 200 mainly, and the first fin 100 and the second fin 200 will be illustrated in detail as follow. The first fin 100 has a first body 110, a first communicating-groove structure 120, a second communicating-groove structure 130, and a first connecting-groove structure 140, wherein the first communicating-groove structure 120, the second communicating-groove structure 130, and the first connecting-groove structure 140 are disposed in first body 110, The first communicating-groove structure 120 has multiple first communicating-groove assemblies 122 arranged in the first body 110 along the disposing axis L3, and the first connecting-groove structure 140 has multiple first connecting-groove assemblies 142 arranged in the first body 110 along the disposing axis L3. Each first communicating-groove assembly 122 has multiple first communicating-groove units 122a arranged in the first body 110 along a connecting axis L2, and each first connecting-groove assembly 142 has multiple first connecting-groove units 142a arranged in the first body 110 along the connecting axis L2. In addition, the second communicating-groove structure 130 is, for example, constituted of multiple second communicating-groove units 132a arranged in the first body 110 along the disposing axis L3. Each second communicating-groove unit 132a is, for example, arranged in one side of the corresponding first communicating-groove assembly 122 along the connecting axis L2.

Each second fin 200 has a second body 210, a third communicating-groove structure 220, a fourth communicating-groove structure 230, and a second connecting-groove structure 240, wherein the third communicating-groove structure 220, the fourth communicating-groove structure 230, and the second connecting-groove structure 240 are disposed in the second body 210. The third communicating-groove structure 220 has multiple third communicating-groove assemblies 222 arranged in the second body 210 along the disposing axis L3, and the second connecting-groove structure 240 has multiple second connecting-groove assemblies 242 arranged in the second body 210 along the disposing axis L3. Each third communicating-groove assembly 222 has multiple third communicating-groove unit 222a arranged in the second body 210 along the connecting axis L2, and each second connecting-groove assembly 242 has multiple second connecting-groove units 242a arranged in the second body 210 along the connecting axis L2. Besides, the fourth communicating-groove structure 230 is, for example, constituted of multiple fourth communicating-groove units 232a arranged in the second body 210 along the disposing axis L3. Each fourth communicating-groove unit 232a is, for example, arranged in one side of the corresponding third communicating-groove assembly 222 along the connecting axis L2.

In the heat exchanger 10 of the present embodiment, the connecting-groove unit or the communicating-groove unit is, for example, diamond type structure. That is, the first communicating-groove unit 122a, the third communicating-groove unit 222a, the first connecting-groove unit 142a, and the second connecting-groove unit 242a are, for example, diamond type structures. The connecting-groove unit or the communicating-groove unit of the present embodiment can be a circular type structure or a triangular type structure, the present invention does not have any limitation.

From the above, in the first fin 100, the first communicating-groove structure 120 also includes a first mainstream channel 124, and the first communicating-groove assembly 122 is, for example, a tributary channel. The tributary channels constituted of the first communicating-groove assemblies 122 are connected with the first mainstream channel 124 along the connecting axis L2. The first connecting-groove structure 140 further includes a second mainstream channel 144, and each first connecting-groove assembly 142 is, for example, a tributary channel, the tributary channels constituted of the first connecting-groove assemblies 142 are connected with the second mainstream channel 144 along the connecting axis L2. The second communicating-groove structure 130 is disposed between the second mainstream channel 144 and the first communicating-groove structure 120. In detail, each second communicating-groove unit 132a is disposed between the second mainstream channel 144 and the corresponding first communicating-groove assembly 122.

Similarly, in the second fin 200, the third communicating-groove structure 220 further includes a third mainstream channel 224, and each third communicating-groove assembly 222 is, for example, a tributary channel. The tributary channels constituted of the third communicating-groove assemblies 222 are connected with the third mainstream channel 224 along the connecting axis L2. The second connecting-groove structure 240 further includes a fourth mainstream channel 244, and each second connecting-groove assembly 242 is, for example, a tributary channel. The tributary channels constituted of the second connecting-groove assemblies 242 are connected with the fourth mainstream channel 244 along the connecting axis L2. The fourth communicating-groove structure 230 is disposed between the fourth mainstream channel 244and the third communicating-groove structure 220. In detail, each fourth communicating-groove unit 232a is disposed between the fourth mainstream channel 244 and the corresponding third communicating-groove assembly 222.

The first communicating-groove structure 120, the first connecting-groove structure 140, the third communicating-groove structure 220, the second connecting-groove structure 240 are, for example, similar to the "claw" type structure or the "E" type structure. The first communicating-groove structure 120 and the first connecting-groove structure 140are embedded with each other in first body 110, and the third communicating-groove structure 220 and the second connecting-groove structure 240are embedded with each other in the second body 210. That is, in the first body 110, one first communicating-groove structure 120 is disposed between two first connecting-groove structures 140, and one first connecting-groove structure 140 is disposed between two first communicating-groove structures 120. Similarly, in the second body 210, one third communicating-groove structures 220 is disposed between two second connecting-groove structure 240, and one second connecting-groove structure 240 is disposed between two third communicating-groove structures 220.

When the first fin 100, the second fin 200, the third fin 300, the fourth fin 400, the fifth fin 500, and the sixth fin 600 are contacted along the assembly axis L1, the projection area of the second connecting-groove structure 240 in first body 110 is overlapped with the first communicating-groove structure 120 and the second communicating-groove structure 130, and the projection area of the first connecting-groove structure 140 in the second body 210 is overlapped with the third communicating-groove structure 220 and the fourth communicating-groove structure 230. Further, one end of each second connecting-groove assembly 242 of the second fin 200 is overlapped with the first communicating-groove structure 120 of the adjacent the first fin 100 along the connecting axis L2. The other end of the second connecting-groove assembly 242 is overlapped with the second communicating-groove structure 130 of the first fin 100, and the first mainstream channel 124 and the fourth mainstream channel 244 are communicated with each other. In addition, one end of each first connecting-groove assembly 142 of the first fin 100 is overlapped with the third communicating-groove structure 220 of the adjacent second fin 200 along the connecting axis L2. The other end of the first connecting-groove assembly 142 is overlapped with the fourth communicating-groove structure 230 of the second fin 200, and the third mainstream channel 224 and the second mainstream channel 144 are communicated with each other. That is, the second connecting-groove assemblies 242 are adapt to communicate with the first communicating-groove structure 120, and the second communicating-groove structure 130 and the first connecting-groove assemblies 142 are adapt to communicate with the third communicating-groove structure 220 and the fourth communicating-groove structure 230.

Besides, because of the first communicating-groove structure 120 having multiple first communicating-groove assemblies 122 arranged in the first body 110 along the disposing axis L3 and each first communicating-groove assembly 122 having multiple first communicating-groove units 122a arranged in the first body 110 along the connecting axis L2, one end of the second connecting-groove unit 242a of the second fin 200 is overlapped with one end of the first communicating-groove unit 122a of the adjacent first fin 100. The other end of the second connecting-groove unit 242a is overlapped with one end of another first communicating-groove unit 122a of the first fin 100 or the second communicating-groove structure 130 of the first fin 100.

Similarly, because of the third communicating-groove structure 220 having multiple third communicating-groove assemblies 222 arranged in the second body 210 along the disposing axis L3 and each third communicating-groove assembly 222 having multiple third communicating-groove units 222a arranged in the second body 210 along the connecting axis L2, one end of the first connecting-groove unit 142a of the first fin 100 is overlapped with one end of the third communicating-groove unit 222a of the adjacent second fin 200. The other end of the first connecting-groove unit 142a is overlapped with one end of another third communicating-groove unit 222a of the second fin 200 or the fourth communicating-groove structure 230 of the second fin 200. The two first communicating-groove units 122a overlapped with the second connecting-groove unit 242a are arranged in the first body 110 along the connecting axis L2 adjacently. The two third communicating-groove units222a overlapped with the first connecting-groove unit 142a are arranged in the second body 210 along the connecting axis L2 adjacently.

As a result, the first guiding channel C1 is constituted of the first communicating-groove structure 120, the second connecting-groove structure 240, and the second communicating-groove structure 130, and the second guiding channel C2 is constituted of the third communicating-groove structure 220, the first connecting-groove structure 140, and the fourth communicating-groove structure 230. The assembly axis L1, the disposing axis L3, and the connecting axis L2 are, for example, vertical to each other.

In addition, in the present embodiment, the first guiding channel C1 is, for example, capable of flowing for the first heat-exchange fluid F1 with higher temperature, and the second guiding channel C2 is, for example, capable of flowing for the second heat-exchange fluid F2 with lower temperature. The first guiding channel C1 is, for example, a 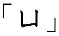 type guiding channel. The second guiding channel C2 is, for example, a 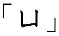 type guiding channel. The across area of the first guiding channel C1 is, for example, across the cross-section of the heat exchanger 10. Similarly, the across area of the second guiding channel C2 also is, for example, across the cross-section of the heat exchanger 10. That is, the across area of the first guiding channel C1 and the across area of the second guiding channel C2 are similar substantially. Therefore, the first heat-exchange fluid F1 and the second heat-exchange fluid F2 can perform the heat-exchange process effectively by flowing across the heat exchanger 10 completely.

In the present embodiment, multiple groove units arranged along the connecting axis L2 can be defined to a groove unit arrangement, and each groove assembly is constituted of multiple groove unit arrangements A. One groove assembly is constituted of the adjacent groove unit arrangements A staggered with each other. That is, the first communicating-groove unit 122a of each first communicating-groove assembly 122 is staggered with the adjacent first communicating-groove unit 122a, the first connecting-groove unit 142a of each first connecting-groove assembly 142 is staggered with the adjacent first connecting-groove unit 142a, the third communicating-groove unit 222a of each third communicating-groove assembly 222 is staggered with the adjacent third communicating-groove unit 222a, and the second connecting-groove unit 242a of each second connecting-groove assembly 242 is staggered with the adjacent second connecting-groove unit 242a .

Therefore, when the first fin 100 and the second fin 200 are contacted along the assembly axis L1, the second connecting-groove unit 242aof the second fin 200 is communicated with the two adjacent first communicating-groove units 122a arranged along the disposing axis L3 and the two adjacent first communicating-groove units 122a arranged along the connecting axis L2 in the first fin 100, the first connecting-groove unit 142a of the first fin 100 is communicated with the two adjacent third communicating-groove units 222a arranged along the disposing axis L3 and the two adjacent third communicating-groove units 222a arranged along the connecting axis L2 in the second fin 200. That is, one second connecting-groove unit 242a is communicated with four adjacent first communicating-groove units 122a of the first fin 100, and one first connecting-groove unit 142a is communicated with four adjacent third communicating-groove units 222a of the second fin 200. Although the above illustration take one connecting-groove unit communicated with adjacent four communicating-groove units for example, but the design of one connecting-groove unit communicated with adjacent four communicating-groove units are all within the spirit and scope of this invention, including but not limited to this type.

From the above, the present embodiment also has better heat-exchange efficiency by the design of one connecting-groove unit communicated with multiple adjacent communicating-groove units and frequent flow separation. The design of each groove assembly constituted of multiple groove units further increases the heat-exchange area between the heat-exchange fluid and the fin substantially, and upgrades the heat-exchange efficiency of the heat exchanger 10. In addition, because of one end of the two connected groove units overlapped with each other partially in the present embodiment, the heat-exchange fluid flowed to the connecting-groove unit or the communicating-groove unit will be separated or confluent continuously by the groove wall as described in above embodiment. Therefore, in the process of the heat-exchange fluid flowing through the heat exchanger 10, there will be a largest contact area between each fin and the heat-exchange fluid, and the heat exchanger 10 can perform the heat-exchange process in each connecting-groove unit or communicating-groove unit with the heat-exchange fluid, and make the heat exchanger 10 have a good heat-exchange efficiency.

Worth mentioning is that the groove units of the present embodiment are, for example, a diamond type structure. The inner wall of the groove unit has at least a slope structure, so that the heat-exchange fluid will separated toward multiple directions after the heat-exchange fluid colliding with the end of the groove unit. There will be produced a serious turbulence to make the heat-exchange fluid in one section perform the heat-exchange stably.

Afterwards, other fins of the present embodiment will be illustrated as follow. The third fin 300 of the present embodiment has a first inlet structure 310 and a first outlet structure 320, and the fourth fin 400 has a second inlet structure 410 and a second the outlet structure 420. The first inlet structure 310 and the first outlet structure 320 are connected to the two ends of the first guiding channel C1, and the second inlet structure 410 and the second the outlet structure 420 are connected to the two ends of the second guiding channel C2. The first outlet structure 320 of the third fin 300 is, for example, constituted of multiple first the outlet units 322 arranged along the disposing axis L3. The second the outlet structure 420 is, for example, constituted of multiple second the outlet unit 422 arranged along the disposing axis L3. The projection area of the first the outlet units 322 in first body 110 is overlapped with the second communicating-groove structure 130, and the projection area of the second the outlet unit 412 in the second body 210 is overlapped with the fourth communicating-groove structure 230. the projection area of the first inlet structure 310 and the first outlet structure 320 of the third fin 300 in the fourth fin 400 is not overlapped with the second inlet structure 410 and the second the outlet structure 420.

Therefore, when the third fin 300 and the fourth fin 400 are disposed in the two sides of the assembly of the first fin 100 and the second fin 200 along the assembly axis L1 respectively, the first the outlet units 322 and the second communicating-groove structure 130 are communicated with each other, and the second the outlet units 422 and the fourth communicating-groove structure 220 are communicated with each other. That is, the first outlet structure 320 is communicated with the second communicating-groove structure 130, and the second the outlet structure 420 is communicated with the fourth communicating-groove structure 230. In addition, in the present embodiment, the first inlet structure 310 is communicated with the first communicating-groove structure 120, and the second inlet structure 410 is communicated with the third communicating-groove structure 220. The first outlet structure 320 of the third fin 300 is, for example, constituted of multiple first the outlet units 322 arranged along the disposing axis L3. The second outlet structure 410 is, for example, constituted of multiple second outlet units 422 arranged along the disposing axis L3. The design can increase the heat-exchange area between the heat-exchange fluid and the fin.

In addition, the fifth fin 500 has a first through hole 510 and a second through hole 520, the sixth fin 600 has a third through hole 610 and a fourth through hole 620, one side of the first inlet structure 310 is communicated with the first communicating-groove structure 120, another side of the first inlet structure 310 is communicated with the first through hole 510, one side of the first outlet structure 320 is communicated with the second communicating-groove structure 130, another side of the first outlet structure 320 is communicated with the second through hole 520, one side of the second inlet structure 410 is communicated with the third communicating-groove structure 220, another side of the second inlet structure 410 is communicated with the third through hole 610, one side of the second the outlet structure 420 is communicated with the fourth communicating-groove structure 230, another side of the second the outlet structure 420 is communicated with the fourth through hole 620.

As a result, the first heat-exchange fluid F1 with higher temperature can flow into the first guiding channel C1 through the first through hole 510 and the first inlet structure 310, and flow out of the heat exchanger 10 through the first outlet structure 320 and the second through hole 520 after flowing out of the first guiding channel C1. On the other hand, the second heat-exchange fluid F2 with lower temperature can flow into the second guiding channel C2 through the third through hole 610 and the second inlet structure 410, and flow out of the heat exchanger 10 through the second the outlet structure 420 and fourth through hole 620 after flowing out of the second guiding channel C2. By the above connection, the heat-exchange process can be performed between the first heat-exchange fluid F1 with higher temperature and the second heat-exchange fluid F2 with lower temperature in the heat exchanger 10. The heat exchanger 10 of the present embodiment further includes a seventh fin 700 and a eighth fin 800. The seventh fin 700 and the eighth fin 800 are disposed in the two sides of the assembly of the first fin 100, the second fin 200, the third fin 300, the fourth fin 400, the fifth fin 500, and sixth fin 600 along the assembly axis L1, and the heat-exchange fluids can flow into or out of the heat exchanger 10 through a opening disposed in the seventh fin 700 or the eighth fin 800.

The present embodiment takes the stagger of a first fin 100 and a second fin 200 along the assembly axis L1 mainly. In other embodiments, multiple first fins 100 can be assembled in advance, and multiple second fins 200 can be assembled in advance. And then, the assembly of the first fins 100 and the assembly of the second fins 200 can be staggered to constitute another heat exchanger. About the staggered method of the assembly of the first fins 100 and the second fins 200, the present invention does not have any limitation. In addition, the present embodiment is constituted of at least a first fin 100 and at least a second fin 200 mainly, the assembled type of the third fin 300, the fourth fin 400, the fifth fin 500, the sixth fin 600, the seventh fin 700, and the eighth fin 800 opposite to the location of the first fin 100 and the second fin 200 as described in above is one of various embodiments. It is within the scope and spirit of the present invention as long as the appropriate disposing type for the first guiding channel C1 and the second guiding channel C2 flowing smoothly, and the present invention does not have any limitation.

To sum up, in the heat exchanger of the invention, at least two fins are set with multiple communicating-groove structures and connecting-groove structure in the heat exchanger respectively. In each fin, a communicating-groove structure is not communicated with a connecting-groove structure, and one communicating-groove structure is not communicated with another communicating-groove structure. When the fins are assembled, a communicating-groove structure of one fin is communicated with the adjacent communicating-groove structure through a connecting-groove structure of another fin. The communicating-groove structures are disposed in heat exchanger densely by various arrangements, further have a guiding channel with a good heat-exchange efficiency. Thus, the heat exchanger of the invention has two guiding channels to perform the heat-exchange process for the fluids with different temperatures.

In addition, since the heat exchanger of the invention is assembled by at least two types of fins staggered with each other and each fin has multiple communicating-groove structures and a connecting-groove structure, the heat-exchange fluid is forced to be confluent or separated constantly when The heat-exchange fluid flows into the heat exchanger. This increases the contact area between the heat-exchange fluid and heat exchanger substantially, and increases the rate of the heat-exchange process of heat-exchange fluids to achieve good heat-exchange performance.

Although the invention has been described with reference to the above embodiments, it will be apparent to one of the ordinary skill in the art that modifications to the described embodiments may be made without departing from the spirit of the invention. Accordingly, the scope of the invention will be defined by the attached claims rather than by the above detailed descriptions.

## Claims

1. A heat exchanger, comprising:
at least a first fin (100) having a first body (110) the first fin (100) having a first communicating-groove structure (120), a second communicating-groove structure (130), and a first connecting- groove structure (140), the first communicating-groove structure (120), the second communicating-groove structure (130), and the first connecting-groove structure (140) are disposed in the first body (110), and at least a second fin (200), having a second body (210) having a third communicating-groove structure (220), a fourth communicating-groove structure (230), and a second connecting-groove structure (240), the third communicating-groove structure (220), the fourth communicating- groove structure (230), and the second connecting-groove structure (240) are disposed in the second body (210), **characterized in that** the first communicating-groove structure (120) has multiple first communicating-groove assemblies (122) arranged in the first body (110) along a disposing axis (L3), the first connecting-groove structure (140) has multiple first connecting-groove assemblies (142) arranged in the first body (110) along the disposing axis (L3), each first communicating-groove assembly (122) has multiple first communicating-groove units (122a) arranged in the first body (110) along a connecting axis (L2), each first connecting-groove assembly (142) has multiple first connecting-groove units (142a) arranged in the first body (110) along the connecting axis (L2); and wherein the third communicating-groove structure (220) has multiple third communicating-groove assemblies (222) arranged in the second body (210) along the disposing axis (L3), the second connecting-groove structure (240) has multiple second connecting-groove assemblies (242) arranged in the second body (210) along the disposing axis (L3), each third communicating-groove assembly (222) has multiple third communicating-groove units (222a) arranged in the second body (210) along the connecting axis (L2), each second connecting-groove assembly (242) has multiple second connecting-groove units (242a) arranged in the second body (210) along the connecting axis (L2),
wherein each first fin (100) and each second fin (200) are connected along an assembly axis (LI), the second connecting-groove assemblies (242) are communicated with the first communicating-groove structure (120) and the second communicating- groove structure (130), the first connecting-groove assemblies (142) are communicated with the third communicating-groove structure (220) and the fourth communicating- groove structure (230), the first communicating-groove unit (122a) of each first communicating-groove assembly (122) is staggered with the adjacent first communicating-groove unit (122a), the first connecting-groove unit (142a) of each first connecting-groove assembly (142) is staggered with the adjacent connecting-groove unit (142a), the third communicating-groove unit (222a) of each third communicating- groove assembly (222) is staggered with the adjacent third communicating-groove unit (222a), the second connecting-groove unit (242a) of each second connecting-groove assembly (242) is staggered with the adjacent second connecting-groove unit (242a), the first communicating-groove structure (120), the second connecting-groove structure (240), and the second communicating-groove structure (130) constitute a first guiding channel (C1), the third communicating-groove structure (222a), the first connecting- groove structure (140), and the fourth communicating-groove structure (230) constitute a second guiding channel (C2), wherein a first heat-exchange fluid (FI) flows in the first guiding channel (C1), a second heat-exchange fluid (F2) flows in the second guiding channel (C2).

2. The heat exchanger as recited in claim 1, wherein one end of each second connecting-groove assembly (242) of the second fin (200) is overlapped with the first communicating-groove structure (120) of the adjacent first fin (100) along the connecting axis (L2), the other end of each second connecting-groove assembly (242) is overlapped with the second communicating-groove structure (130) of the first fin (100), one end of each first connecting-groove assembly (142) of the first fin (100) is overlapped with the third communicating-groove structure (220) of the adjacent second fin (200) along the connecting axis (L2), the other end of each first connecting-groove assembly (142) is overlapped with the fourth communicating-groove structure (230) of the second fin (200).

3. The heat exchanger as recited in claim 2, wherein one end of the second connecting-groove unit (242a) of the second fin (200) is overlapped with one end of the first communicating-groove unit (122a) of the adjacent first fin (100), the other end of the second connecting-groove unit (242a) is overlapped with one end of another first communicating-groove unit (122a) of the first fin (100) or the second communicating- groove structure (242a) of the first fin (100), one end of the first connecting-groove unit (142a) of the first fin (100) is overlapped with one end of the third communicating- groove unit (222a) of the adjacent second fin (200), the other end of the first connecting-groove unit (142a) is overlapped with one end of another third communicating-groove unit (222a) of the second fin (200) or the fourth communicating- groove structure (230) of the second fin (200).

4. The heat exchanger as recited in claim 3, wherein the two first communicating- groove units (122a) overlapped with the second connecting-groove unit (242a) are arranged in the first body (110) along the connecting axis (L2) closely, and the two third communicating-groove units (222a) overlapped with the first connecting-groove unit (142a) are arranged in the second body (210) along the connecting axis (L2) closely.

5. The heat exchanger as recited in claim 1, wherein the second connecting-groove unit (242a) of the second fin (200) is communicated with the two adjacent first communicating-groove units (122a) of the first fin (100) arranged along the disposing axis (L3) and the two adjacent first communicating-groove units (122a) arranged along the connecting axis (L2), the first connecting-groove unit (142a) of the first fin (100) is communicated with the two adjacent third communicating-groove units (222a) of the second fin (200) arranged along the disposing axis (L3) and the two adjacent third communicating-groove units (222a) arranged along the connecting axis (L2).

6. The heat exchanger as recited in claim 1, wherein the second communicating- groove structure (130) has multiple second communicating-groove units (132a) arranged in the first body (110) along the disposing axis (L3), each second communicating-groove unit (132a) is arranged in one side of the corresponding first communicating-groove assembly (122) along the connecting axis (L2), the fourth communicating-groove structure (220) has multiple fourth communicating-groove units arranged in the second body (210) along the disposing axis (L3), each fourth communicating-groove unit is arranged in one side of the corresponding third communicating-groove assembly (222) along the connecting axis (L2).

7. The heat exchanger as recited in claim 1, wherein the first communicating- groove structure (120) further includes a first mainstream channel (124), each first communicating-groove assembly (122) constitutes to a tributary channel connected with the first mainstream channel along the connecting axis (L2), the first connecting-groove structure (140) further includes a second mainstream channel (144), each first connecting-groove assembly (142) constitutes to another tributary channel connected with the second mainstream channel (144) along the connecting axis (L2), the third communicating-groove structure (220) farther includes a third mainstream channel (224), each third communicating-groove assembly (222) constitutes to another tributary channel connected with the third mainstream channel (224) along the connecting axis (L2), the second connecting-groove structure (242) further includes a fourth mainstream channel (244), each second connecting-groove assembly (242) is connected with the fourth mainstream channel (244) along the connecting axis (L2), the first mainstream channel (124) and the fourth mainstream channel (244) are communicated with each other, the third mainstream channel (224) and the second mainstream channel (144) are communicated with each other.

8. The heat exchanger as recited in claim 7, wherein the projection area of the second connecting-groove structure (240) in the first body (110) is overlapped with the first communicating-groove structure (120) and the second communicating-groove structure (130), the projection area of the first connecting-groove structure (140) in the second body (210) is overlapped with the third communicating-groove structure (220) and the fourth communicating-groove structure (230), the first communicating-groove structure (120), the first connecting-groove structure (140), the third communicating- groove structure (220), and the second connecting-groove structure (240) are similar to the "claw" type structure or the "E" type structure.

9. The heat exchanger as recited in claim 8, wherein the first communicating- groove structure (120) and the first connecting-groove structure (140) are embedded in the first body (110), the third communicating-groove structure (220) and the second connecting-groove structure (240) are embedded in the first body (110), the second communicating-groove structure (130) is disposed between the second mainstream charnel (144) and the first communicating-groove structure (120), the fourth communicating-groove structure (230) is disposed between the fourth mainstream channel (244) and the third communicating-groove structure (220).

10. The heat exchanger as recited in claim 1, further includes a third fin (300) and a fourth fin (400) , the third fin (300) and the fourth fin (400) are disposed in the two sides of the assembly of the first fin (100) and the second fin (200) along the assembly axis (LI) respectively, the third fin (300) has a first inlet structure (310) and a first outlet structure (320), the fourth fin (400) has a second inlet structure (410) and a second the outlet structure (420), the first inlet structure (310) and the first outlet structure (320) are connected to the two ends of the first guiding channel (C1), the second inlet structure (410) and the second outlet structure (420) are connected to the two ends of the second guiding channel (C2), the first inlet structure (310) is communicated with the first communicating-groove structure (120), the first outlet structure (320) is communicated with the second communicating-groove structure (130), the second inlet structure (410) is communicated with the third communicating-groove structure (220), the second outlet structure (420) is communicated with the fourth communicating-groove structure (230).

11. The heat exchanger as recited in claim 10, further includes a fifth fin (500) and a sixth fin (600), the fifth fin (500) and the sixth fin (600) are disposed in the two sides of the assembly of each first fin (100), each second fin (200), each third fin (300), and each fourth fin (400) along the assembly axis (LI) respectively, the fifth fin (500) has a first through hole (510) and a second through hole (520), the sixth fin (600) has a third through hole (610) and a fourth through hole (620), one side of the first inlet structure (310) is communicated with the first communicating-groove structure (120), another side of the first inlet structure (310) is communicated with the first through hole (510), one side of the first outlet structure (320) is communicated with the second communicating-groove structure (130), and another side of the first outlet structure (320) is communicated with the second through hole (520), one side of the second inlet structure (410) is communicated with the third communicating-groove structure (220), and another side of the second inlet structure (410) is communicated with the third through hole (610), one side of the second outlet structure (420) is communicated with the fourth communicating-groove structure (230), and another side of the second outlet structure (420) is communicated with the fourth through hole (620).

## Patentansprüche

1. Wärmetauscher, umfassend:
zumindest eine erste Lamelle (100) mit einem ersten Körper (110), wobei die erste Lamelle (100) eine erste Kommunikationsnutstruktur (120), eine zweite Kommunikationsnutstruktur (130) und eine erste Verbindungsnutstruktur (140) aufweist, die erste Kommunikationsnutstruktur (120), die zweite Kommunikationsnutstruktur (130) und die erste Verbindungsnutstruktur (140) in dem ersten Körper (110) angeordnet sind, und zumindest eine zweite Lamelle (200) mit einem zweiten Körper (210) mit einer dritten Kommunikationsnutstruktur (220), einer vierten Kommunikationsnutstruktur (230) und einer zweiten Verbindungsnutstruktur (240), wobei die dritte Kommunikationsnutstruktur (220), die vierte Kommunikationsnutstruktur (230) und die zweite Verbindungsnutstruktur (240) in dem zweiten Körper (210) angeordnet sind, **dadurch gekennzeichnet, dass** die erste Kommunikationsnutstruktur (120) mehrere erste Kommunikationsnutanordnungen (122) aufweist, die in dem ersten Körper (110) entlang einer Anordnungsachse (L3) angeordnet sind, die erste Verbindungsnutstruktur (140) mehrere erste Verbindungsnutanordnungen (142) aufweist, die in dem ersten Körper (110) entlang der Anordnungsachse (L3) angeordnet sind, jede erste Kommunikationsnutanordnung (122) mehrere erste Kommunikationsnuteinheiten (122a) aufweist, die in dem ersten Körper (110) entlang einer Verbindungsachse (L2) angeordnet sind, jede erste Verbindungsnutanordnung (142) mehrere erste Verbindungsnuteinheiten (142a) aufweist, die in dem ersten Körper (110) entlang der Verbindungsachse (L2) angeordnet sind; und
wobei die dritte Kommunikationsnutstruktur (220) mehrere dritte Kommunikationsnutanordnungen (222) aufweist, die in dem zweiten Körper (210) entlang der Anordnungsachse (L3) angeordnet sind, die zweite Verbindungsnutstruktur (240) mehrere zweite Verbindungsnutanordnungen (242) aufweist, die in dem zweiten Körper (210) entlang der Anordnungsachse (L3) angeordnet sind, jede dritte Kommunikationsnutanordnung (222) mehrere dritte Kommunikationsnuteinheiten (222a) aufweist, die in dem zweiten Körper (210) entlang der Verbindungsachse (L2) angeordnet sind, jede zweite Verbindungsnutanordnung (242) mehrere zweite Verbindungsnuteinheiten (242a) aufweist, die in dem zweiten Körper (210) entlang der Verbindungsachse (L2) angeordnet sind,
wobei jede erste Lamelle (100) und jede zweite Lamelle (200) entlang einer Anordnungsachse (L1) verbunden sind, die zweiten Verbindungsnutanordnungen (242) mit der ersten Kommunikationsnutstruktur (120) und der zweiten Kommunikationsnutstruktur (130) kommunizieren, die ersten Verbindungsnutanordnungen (142) mit der dritten Kommunikationsnutstruktur (220) und der vierten Kommunikationsnutstruktur (230) kommunizieren, die erste Kommunikationsnuteinheit (122a) jeder ersten Kommunikationsnutanordnung (122) zu der benachbarten ersten Kommunikationsnuteinheiten (122a) versetzt ist, die erste Verbindungsnuteinheit (142a) jeder ersten Verbindungsnutanordnung (142) zu der benachbarten Verbindungsnuteinheit (142a) versetzt ist, die dritte Kommunikationsnuteinheit (222a) jeder dritten Kommunikationsnutanordnungen (222) zu der benachbarten dritten Kommunikationsnuteinheiten (222a) versetzt ist, die zweite Verbindungsnuteinheit (242a) jeder zweiten Verbindungsnutanordnung (242) zu der benachbarten zweiten Verbindungsnuteinheit (242a) versetzt ist, die erste Kommunikationsnutstruktur (120), die zweite Verbindungsnutnutstruktur (240) und die zweiten Kommunikationsnutstruktur (130) einen ersten Führungskanal (C1) ausbilden, die dritte Kommunikationsnuteinheit (222a), die erste Verbindungsnutstruktur (140) und die vierte Kommunikationsnutstruktur (230) einen zweiten Führungskanal (C2) ausbilden, wobei ein erstes Wärmetauschfluid (F1) im ersten Führungskanal (C1) fließt und in dem zweiten Führungskanal (C2) ein zweites Wärmetauschfluid (F2) fließt.

2. Wärmetauscher nach Anspruch 1, wobei ein Ende jeder zweiten Verbindungsnutanordnung (242) der zweiten Lamelle (200) mit der ersten Kommunikationsnutstruktur (120) der benachbarten ersten Lamelle (100) entlang der Verbindungsachse (L2) überlappt, das andere Ende jeder zweiten Verbindungsnutanordnung (242) mit der zweiten Kommunikationsnutstruktur (130) der ersten Lamelle (100) überlappt, ein Ende jeder ersten Verbindungsnutanordnung (142) der ersten Lamelle (100) mit der dritten Kommunikationsnutstruktur (220) der benachbarten zweiten Lamelle (200) entlang der Verbindungsachse (L2) überlappt, das andere Ende jeder ersten Verbindungsnutanordnung (142) mit der vierten Kommunikationsnutstruktur (230) der zweiten Lamelle (200) überlappt.

3. Wärmetauscher nach Anspruch 2, wobei ein Ende der zweiten Verbindungsnuteinheit (242a) der zweiten Lamelle (200) mit einem Ende der ersten Kommunikationsnuteinheit (122a) der benachbarten ersten Lamelle (100) überlappt, das andere Ende der zweiten Verbindungsnuteinheit (242a) mit einem Ende einer anderen ersten Kommunikationsnuteinheit (122a) der ersten Lamelle (100) oder der zweiten Kommunikationsnutstruktur (242a) der ersten Lamelle (100) überlappt, ein Ende der ersten Verbindungsnuteinheit (142a) der ersten Lamelle (100) mit einem Ende der dritten Kommunikationsnuteinheiten (222a) der benachbarten zweiten Lamelle (200) überlappt, das andere Ende der ersten Verbindungsnuteinheit (142a) mit einem Ende einer anderen dritten Kommunikationsnuteinheiten (222a) der zweiten Lamelle (200) oder der vierten Kommunikationsnutstruktur (230) der zweiten Lamelle (200) überlappt.

4. Wärmetauscher nach Anspruch 3, wobei die zwei ersten Kommunikationsnuteinheiten (122a), die mit der zweiten Verbindungsnuteinheit (242a) überlappen, in dem ersten Körper (110) nahe entlang der Verbindungsachse (L2) angeordnet sind, und die zwei dritten Kommunikationsnuteinheiten (222a), die mit der ersten Verbindungsnuteneinheit (142a) überlappen in dem zweiten Körper (210) nahe entlang der Verbindungsachse (L2) angeordnet sind.

5. Wärmetauscher nach Anspruch 1, wobei die zweite Verbindungsnuteinheit (242a) der zweiten Lamelle (200) mit den zwei benachbarten entlang der Anordnungsachse (L3) angeordneten ersten Kommunikationsnuteinheit (122a) der ersten Lamelle (100) und den zwei benachbarten entlang der Verbindungsachse (L2) angeordnet ersten Kommunikationsnuteinheiten (122a) kommunizieren, die erste Verbindungsnuteneinheit (142a) der ersten Lamelle (100) mit den zwei benachbarten entlang der Anordnungsachse (L3) angeordneten dritten Kommunikationsnuteinheiten (222a) der zweiten Lamelle (200) kommunizieren und die zwei benachbarten dritten Kommunikationsnuteinheiten (222a), die entlang der Verbindungsachse (L2) angeordnet sind.

6. Wärmetauscher nach Anspruch 1, wobei die zweite Kommunikationsnutstruktur (130) mehrere zweite Kommunikationsnuteinheiten (132a) aufweist, die in dem ersten Körper (110) entlang der Anordnungsachse (L3) angeordnet sind, jede zweite Kommunikationsnuteinheit (132a) in einer Seite der entsprechenden ersten Kommunikationsnutanordnungen (122) entlang der Verbindungsachse (L2) angeordnet ist, die vierte Kommunikationsnutstruktur (220) mehrere vierte Kommunikationsnuteinheiten aufweist, die in der zweiten Körper (210) entlang der Anordnungsachse (L3) angeordnet sind, jede vierte Kommunikationsnuteinheit in einer Seite der entsprechenden dritten Kommunikationsnutanordnungen (222) entlang der Verbindungsachse (L2) angeordnet ist.

7. Wärmetauscher nach Anspruch 1, wobei die erste Kommunikationsnutstruktur (120) ferner einen ersten Hauptströmungskanal (124) aufweist, jede erste Kommunikationsnutanordnung (122) einen mit dem ersten Hauptstromkanal entlang der Verbindungachse (L2) verbundenen Nebenkanal ausbildet, die erste Verbindungsnutstruktur (140) ferner einen zweiten Hauptströmungskanal (144) aufweist, jede erste Verbindungsnutanordnung (142) einen anderen mit dem zweiten Hauptströmungskanal (144) verbundenen Nebenkanal entlang der Verbindungsachse (L2) ausbildet, die dritte Kommunikationsnutstruktur (220) ferner einen dritten Hauptströmungskanal (224) aufweist, jede dritte Kommunikationsnutanordnungen (222) einen weiteren mit dem dritten Hauptströmungskanal (224) verbunden Nebenkanal entlang der Verbindungsachse (L2) ausbildet, die zweite Verbindungsnutstruktur (242) ferner einen vierten Hauptströmungskanal (244) aufweist, jede zweite Verbindungsnutanordnung (242) mit dem vierten Hauptströmungskanal (244) entlang der Verbindungsachse (L2) kommuniziert, der erste Hauptströmungskanal (124) und der vierte Hauptströmungskanal (244) miteinander kommunizieren, der dritte Hauptströmungskanal (224) und der zweite Hauptströmungskanal (144) miteinander kommunizieren.

8. Wärmetauscher nach Anspruch 7, wobei die Projektionsfläche der zweiten Verbindungsnutstruktur (240) im ersten Körper (110) mit der ersten Kommunikationsnutstruktur (120) und der zweiten Kommunikationsnutstruktur (130) überlappt, die Projektionsfläche der ersten Verbindungsnutstruktur (140) im zweiten Körper (210) mit der dritten Kommunikationsnutstruktur (220) und der vierten Kommunikationsnutstruktur (230) überlappt, die erste Kommunikationsnutstruktur (120), die erste Verbindungsnutstruktur (140), die dritte Kommunikationsnutstruktur (220) und die zweite Verbindungsnutstruktur (240) ähnlich einer Struktur einer "Klaue" oder als eine " E " förmige Struktur ausgebildet sind.

9. Wärmetauscher nach Anspruch 8, wobei die erste Kommunikationsnutstruktur (120) und die erste Verbindungsnutstruktur (140) in den ersten Körper (110) eingebettet sind, die dritte Kommunikationsnutstruktur (220) und die zweiten Verbindungsnutstruktur (240) in den ersten Körper (110) eingebettet sind, die zweite Kommunikationsnutstruktur (130) zwischen dem zweiten Hauptströmungskanal (144) und der ersten Kommunikationsnutstruktur (120) angeordnet ist, die vierte Kommunikationsnutstruktur (230) zwischen dem vierten Hauptströmungskanal (244) und der dritten Kommunikationsnutstruktur (220) angeordnet ist.

10. Wärmetauscher nach Anspruch 1, ferner umfassend eine dritte Lamelle (300) und eine vierte Lamelle (400), wobei die dritte Lamelle (300) und die vierte Lamelle (400) in den zwei Seiten der Anordnung der ersten Lamelle (100) und der zweiten Lamelle (200) jeweils entlang der Montageachse (L1) angeordnet sind, die dritte Lamelle (300) eine erste Einlassstruktur (310) und eine erste Auslassstruktur (320) aufweist, die vierte Lamelle (400) eine zweite Einlassstruktur (410) und eine zweite Auslassstruktur (420) aufweist, die erste Einlassstruktur (310) und die erste Auslassstruktur (320) mit den zwei Enden des ersten Führungskanals (C1) verbunden sind, die zweite Einlassstruktur (410) und die zweite Auslassstruktur (420) mit den zwei Enden des zweiten Führungskanals (C2) verbunden sind, die erste Einlassstruktur (310) mit der ersten Kommunikationsnutstruktur (120) kommuniziert, die erste Auslassstruktur (320) mit der zweiten Kommunikationsnutstruktur (130) kommuniziert, die zweite Einlassstruktur (410) mit der dritten Kommunikationsnutstruktur (220) kommuniziert, die zweite Auslassstruktur (420) mit der vierten Kommunikationsnutstruktur (230) kommuniziert.

11. Wärmetauscher nach Anspruch 10, ferner umfassend eine fünfte Lamelle (500) und eine sechste Lamelle (600), die fünfte Lamelle (500) und die sechste Lamelle (600) in den zwei Seiten der Anordnung jeder ersten Lamelle (100), jeder zweiten Lamelle (200), jeder dritten Lamelle (300) und jeder vierten Lamelle (400) jeweils entlang der Montageachse (L1) angeordnet sind, die fünfte Lamelle (500) ein erstes Durchgangsloch (510) und ein zweites Durchgangsloch (520) aufweist, die sechste Lamelle (600) ein drittes Durchgangsloch (610) und ein viertes Durchgangsloch (620) aufweist, eine Seite der ersten Einlassstruktur (310) mit der ersten Kommunikationsnutstruktur (120) kommuniziert, eine andere Seite der ersten Einlassstruktur (310) mit dem ersten Durchgangsloch (510) kommuniziert, eine Seite der ersten Auslassstruktur (320) mit der zweiten Kommunikationsnutstruktur (130) kommuniziert, und eine andere Seite der ersten Auslassstruktur (320) mit dem zweiten Durchgangsloch (520) kommuniziert, eine Seite der zweiten Einlassstruktur (410) mit der dritten Kommunikationsnutstruktur (220) kommuniziert und eine andere Seite der zweiten Einlassstruktur (410) mit dem dritten Durchgangsloch (610) kommuniziert, eine Seite der zweiten Auslassstruktur (420) mit der vierten Kommunikationsnutstruktur (230) kommuniziert und eine andere Seite der zweiten Auslassstruktur (420) mit dem vierten Durchgangsloch (620) kommuniziert.

## Revendications

1. Echangeur de chaleur comprenant :
au moins une première ailette (100) ayant un premier corps (110), la première ailette (100) ayant une première structure de rainure de communication (120), une deuxième structure de rainure de communication (130), et une première structure de rainure de raccordement (140), la première structure de rainure de communication (120), la deuxième structure de rainure de communication (130) et la première structure de rainure de raccordement (140) sont disposées dans le premier corps (110),
et au moins une deuxième ailette (200) ayant un second corps (210) ayant une troisième structure de rainure de communication (220), une quatrième structure de rainure de communication (230), et une seconde structure de rainure de raccordement (240), la troisième structure de rainure de communication (220), la quatrième structure de rainure de communication (230) et la seconde structure de rainure de raccordement (240) sont disposées dans le second corps (210), **caractérisé en ce que** :
la première structure de rainure de communication (120) a plusieurs premiers ensembles de rainures de communication (122) agencés dans le premier corps (110) le long d'un axe de disposition (L3), la première structure de rainure de raccordement (140) a plusieurs premiers ensembles de rainures de raccordement (142) agencés dans le premier corps (110) le long de l'axe de disposition (L3), chaque premier ensemble de rainures de communication (122) a plusieurs premières unités de rainure de communication (122a) agencées dans le premier corps (110) le long d'un axe de raccordement (L2), chaque premier ensemble de rainures de raccordement (142) a plusieurs premières unités de rainure de raccordement (142a) agencées dans le premier corps (110) le long de l'axe de raccordement (L2) ; et
dans lequel la troisième structure de rainure de communication (220) a plusieurs troisièmes ensembles de rainures de communication (222) agencés dans le second corps (210) le long de l'axe de disposition (L3), la seconde structure de rainure de raccordement (240) a plusieurs seconds ensembles de rainures de raccordement (242) agencés dans le second corps (210) le long de l'axe de disposition (L3), chaque troisième ensemble de rainures de communication (222) a plusieurs troisièmes unités de rainure de communication (222a) agencées dans le second corps (210) le long de l'axe de raccordement (L2), chaque second ensemble de rainures de raccordement (242) a plusieurs secondes unités de rainure de raccordement (242a) agencées dans le second corps (210) le long de l'axe de raccordement (L2),
dans lequel chaque première ailette (100) et chaque deuxième ailette (200) sont raccordées le long d'un axe d'assemblage (L1), les seconds ensembles de rainures de raccordement (242) communiquent avec la première structure de rainure de communication (120) et la deuxième structure de rainure de communication (130), les premiers ensembles de rainures de raccordement (142) communiquent avec la troisième structure de rainure de communication (220) et la quatrième structure de rainure de communication (230), la première unité de rainure de communication (122a) de chaque premier ensemble de rainure de communication (122) est en quinconce avec la première unité de rainure de communication (122a) adjacente, la première unité de rainure de raccordement (142a) de chaque premier ensemble de rainures de raccordement (142) est en quinconce avec l'unité de rainure de raccordement (142a) adjacente, la troisième unité de rainure de communication (222a) de chaque troisième ensemble de rainures de communication (222) est en quinconce avec la troisième unité de rainure de communication (222a) adjacente, la seconde unité de rainure de raccordement (242a) de chaque second ensemble de rainures de raccordement (242) est en quinconce avec la seconde unité de rainure de raccordement (242a) adjacente, la première structure de rainure de communication (120), la seconde structure de rainure de raccordement (240) et la deuxième structure de rainure de communication (130) constituent un premier canal de guidage (C1), la troisième structure de rainure de communication (222a), la première structure de rainure de raccordement (140) et la quatrième structure de rainure de communication (230) constituent un second canal de guidage (C2), dans lequel un premier fluide d'échange de chaleur (F1) s'écoule dans le premier canal de guidage (C1), un second fluide d'échange de chaleur (F2) s'écoule dans le second canal de guidage (C2).

2. Echangeur de chaleur selon la revendication 1, dans lequel une extrémité de chaque second ensemble de rainures de raccordement (242) de la deuxième ailette (200) est recouverte avec la première structure de rainure de communication (120) de la première ailette (100) adjacente le long de l'axe de raccordement (L2), l'autre extrémité de chaque second ensemble de rainures de raccordement (242) est recouverte avec la deuxième structure de rainure de communication (130) de la première ailette (100), une extrémité de chaque premier ensemble de rainures de raccordement (142) de la première ailette (100) est recouverte avec la troisième structure de rainure de communication (220) de la deuxième ailette (200) adjacente le long de l'axe de raccordement (L2), l'autre extrémité de chaque premier ensemble de rainures de raccordement (142) est recouverte avec la quatrième structure de rainure de communication (230) de la deuxième ailette (200).

3. Echangeur de chaleur selon la revendication 2, dans lequel une extrémité de la seconde unité de rainure de raccordement (242a) de la deuxième ailette (200) est recouverte avec une extrémité de la première unité de rainure de communication (122a) de la première ailette (100) adjacente, l'autre extrémité de la seconde unité de rainure de raccordement (242a) est recouverte avec une extrémité d'une autre première unité de rainure de communication (122a) de la première ailette (100) ou la deuxième structure de rainure de communication (242a) de la première ailette (100), une extrémité de la première unité de rainure de raccordement (142a) de la première ailette (100) est recouverte avec une extrémité de la troisième unité de rainure de communication (222a) de la deuxième ailette (200) adjacente, l'autre extrémité de la première unité de rainure de raccordement (142a) est recouverte avec une extrémité d'une autre troisième unité de rainure de communication (222a) de la deuxième ailette (200) ou la quatrième structure de rainure de communication (230) de la deuxième ailette (200).

4. Echangeur de chaleur selon la revendication 3, dans lequel les deux premières unités de rainure de communication (122a) recouvertes avec la seconde unité de rainure de raccordement (242a) sont étroitement agencées dans le premier corps (110) le long de l'axe de raccordement (L2), et les deux troisièmes unités de rainure de communication (222a) recouvertes par la première unité de rainure de raccordement (142a) sont étroitement agencées dans le second corps (210) le long de l'axe de raccordement (L2).

5. Echangeur de chaleur selon la revendication 1, dans lequel la seconde unité de rainure de raccordement (242a) de la deuxième ailette (200) communique avec les deux premières unités de rainure de communication (122a) adjacentes de la première ailette (100) agencées le long de l'axe de disposition (L3) et les deux premières unités de rainure de communication (122a) adjacentes agencées le long de l'axe de raccordement (L2), la première unité de rainure de raccordement (142a) de la première ailette (100) communique avec les deux troisièmes unités de rainure de communication (222a) adjacentes de la deuxième ailette (200) agencées le long de l'axe de disposition (L3) et les deux troisièmes unités de rainure de communication (222a) adjacentes agencées le long de l'axe de raccordement (L2).

6. Echangeur de chaleur selon la revendication 1, dans lequel la deuxième structure de rainure de communication (130) a plusieurs deuxièmes unités de rainure de communication (132a) agencées dans le premier corps (110) le long de l'axe de disposition (L3), chaque deuxième unité de rainure de communication (132a) est agencée dans un côté du premier ensemble de rainures de communication (122) correspondant le long de l'axe de raccordement (L2), la quatrième structure de rainure de communication (220) a plusieurs quatrièmes unités de rainure de communication agencées dans le second corps (210) le long de l'axe de disposition (L3) chaque quatrième unité de rainure de communication est agencée dans un côté du troisième ensemble de rainures de communication (222) correspondant le long de l'axe de raccordement (L2).

7. Echangeur de chaleur selon la revendication 1, dans lequel la première structure de rainure de communication (120) comprend en outre un premier canal de flux primaire (124), chaque premier ensemble de rainures de communication (122) constitue un canal tributaire raccordé avec le premier canal de flux primaire le long de l'axe de raccordement (L2), la première structure de rainure de raccordement (140) comprend en outre un deuxième canal de flux primaire (144), chaque premier ensemble de rainures de raccordement (142) constitue un autre canal tributaire raccordé avec le deuxième canal de flux primaire (144) le long de l'axe de raccordement (L2), la troisième structure de rainure de communication (220) comprend en outre un troisième canal de flux primaire (224), chaque troisième ensemble de rainures de communication (222) constitue un autre canal tributaire raccordé avec le troisième canal de flux primaire (224) le long de l'axe de raccordement (L2), la seconde structure de rainure de raccordement (242) comprend en outre un quatrième canal de flux primaire (244), chaque second ensemble de rainures de raccordement (242) est raccordé avec le quatrième canal de flux primaire (244) le long de l'axe de raccordement (L2), le premier canal de flux primaire (124) et le quatrième canal de flux primaire (244) communiquent entre eux, le troisième canal de flux primaire (224) et le deuxième canal de flux primaire (144) communiquent entre eux.

8. Echangeur de chaleur selon la revendication 7, dans lequel la zone de saillie de la seconde structure de rainure de raccordement (240) dans le premier corps (110) est recouverte avec la première structure de rainure de communication (120) et la deuxième structure de rainure de communication (130), la zone de saillie de la première structure de rainure de raccordement (140) dans le second corps (210) est recouverte avec la troisième structure de rainure de communication (220) et la quatrième structure de rainure de communication (230), la première structure de rainure de communication (120), la première structure de rainure de raccordement (140), la troisième structure de rainure de communication (220) et la seconde structure de rainure de raccordement (240) sont similaires à une structure de type « à griffe » ou une structure de type « en E ».

9. Echangeur de chaleur selon la revendication 8, dans lequel la première structure de rainure de communication (120) et la première structure de rainure de raccordement (140) sont encastrées dans le premier corps (110), la troisième structure de rainure de communication (220) et la seconde structure de rainure de raccordement (240) sont encastrées dans le premier corps (110), la deuxième structure de rainure de communication (130) est disposée entre le deuxième canal de flux primaire (144) et la première structure de rainure de communication (120), la quatrième structure de rainure de communication (230) est disposée entre le quatrième canal de flux primaire (244) et la troisième structure de rainure de communication (220).

10. Echangeur de chaleur selon la revendication 1, comprenant en outre une troisième ailette (300) et une quatrième ailette (400), la troisième ailette (300) et la quatrième ailette (400) sont disposées des deux côtés de l'ensemble de la première ailette (100) et de la deuxième ailette (200) le long de l'axe d'assemblage (L1) respectivement, la troisième ailette (300) a une première structure d'entrée (310) et une première structure de sortie (320), la quatrième ailette (400) a une seconde structure d'entrée (410) et une seconde structure de sortie (420), la première structure d'entrée (310) et la première structure de sortie (320) sont raccordées aux deux extrémités du premier canal de guidage (C1), la seconde structure d'entrée (410) et la seconde structure de sortie (420) sont raccordées aux deux extrémités du second canal de guidage (C2), la première structure d'entrée (310) communique avec la première structure de rainure de communication (120), la première structure de sortie (320) communique avec la deuxième structure de rainure de communication (130), la seconde structure d'entrée (410) communique avec la troisième structure de rainure de communication (220), la seconde structure de sortie (420) communique avec la quatrième structure de rainure de communication (230).

11. Echangeur de chaleur selon la revendication 10, comprenant en outre une cinquième ailette (500) et une sixième ailette (600), la cinquième ailette (500) et la sixième ailette (600) sont disposées des deux côtés de l'assemblage de chaque première ailette (100), chaque deuxième ailette (200), chaque troisième ailette (300) et chaque quatrième ailette (400) le long de l'axe d'assemblage (L1) respectivement, la cinquième ailette (500) a un premier trou débouchant (510), et un deuxième trou débouchant (520), la sixième ailette (600) a un troisième trou débouchant (610) et un quatrième trou débouchant (620), un côté de la première structure d'entrée (310) communique avec la première structure de rainure de communication (120), un autre côté de la première structure d'entrée (310) communique avec le premier trou débouchant (510), un côté de la première structure de sortie (320) communique avec la deuxième structure de rainure de communication (130), et un autre côté de la première structure de sortie (320) communique avec le deuxième trou débouchant (520), un côté de la seconde structure d'entrée (410) communique avec la troisième structure de rainure de communication (220), et un autre côté de la seconde structure d'entrée (410) communique avec le troisième trou débouchant (610), un côté de la seconde structure de sortie (420) communique avec la quatrième structure de rainure de communication (230), et un autre côté de la seconde structure de sortie (420) communique avec le quatrième trou débouchant (620).
